(19) Europäisches Patentamt
European Patent Office
Office européen des brevets

(11) **EP 1 997 925 A1**

(12) **EUROPEAN PATENT APPLICATION**
published in accordance with Art. 158(3) EPC

(43) Date of publication:
**03.12.2008 Bulletin 2008/49**

(51) Int Cl.:
**C22C 27/02** $^{(2006.01)}$    **C22C 14/00** $^{(2006.01)}$

(21) Application number: **06833779.9**

(22) Date of filing: **30.11.2006**

(86) International application number:
**PCT/JP2006/323976**

(87) International publication number:
**WO 2007/108178 (27.09.2007 Gazette 2007/39)**

(84) Designated Contracting States:
**DE FR GB**

(30) Priority: **17.03.2006 JP 2006075102**

(71) Applicant: **University of Tsukuba Ibaraki 305-8577 (JP)**

(72) Inventors:
• **MIYAZAKI, Shuichi Tsukuba-shi Ibaraki 305-8577 (JP)**

• **KIM, Heeyoung Tsukuba-shi Ibaraki 305-8577 (JP)**
• **PIO, Buenconsejo Tsukuba-shi Ibaraki 305-8577 (JP)**
• **HOSODA, Hideki Yokohama-shi Kanagawa 225-0005 (JP)**

(74) Representative: **Bergmeier, Werner Canzler & Bergmeier Friedrich-Ebert-Straße 84 85055 Ingolstadt (DE)**

(54) **TITANIUM-TANTALUM SHAPE MEMORY ALLOY, ACTUATOR, AND ENGINE**

(57) A Titanium-Tantalum base shape memory alloy is provided which possesses high machinability and is suitable for repeated high temperature operation. The said Titanium-Tantalum base shape memory alloy consist of 30mol%-40mol% Tantalum; and the balance Titanium; and unavoidable impurity.

Fig. 2A

EP 1 997 925 A1

Fig. 2B

**Description**

**Technical field**

The present invention relates to Titanium-Tantalum base shape memory alloys, as well as an actuator and a engine using the said shape memory alloys. More particularly, the present invention relates to Titanium-Tantalum base shape memory alloys with reverse transformation temperature over 50°C, as well as an actuator and a engine using the said shape memory alloy.

**Background of the invention**

Ti-Ni base alloys are widely known shape memory alloys consisting of Titanium (Ti) and Nickel (Ni) which reverts back to its original configuration upon application of heat up to its prescribed operating temperature, therefore, to remember their original shape.

However, in the commercial Ti-Ni alloys, the peak transformation temperature (M*) is below 70°C(343K), and peak reverse transformation temperature (A*) below 100°C (373K), thus the operating temperature of shape memory effect is less than approximately 100°C. Accordingly, conventional Ti-Ni base alloy is not suitable for operation as shape memory alloys at high temperature. For example, Ti-Ni-Cu base alloys are generally known to exhibit shape memory effect at temperature in the range of 200K to 360K (Patent document.1, Kokai publication Tokukai No. 2002-294371).

The below mentioned alloys are generally well known high temperature shape memory alloys to be used at high temperature (over 50°C in the present application) with transformation start temperature exceeding 110°C.

(1) (Ti-Zr)-Ni alloys

In the (Ti-Zr)-Ni base alloy, Titanium is substituted by 0-20 mol% (atomic percent) Zirconium, thus a corresponding martensite start temperature (Ms) from 373(K) to 550(K) is obtained.

(2) (Ti-Hf)-Ni alloys

In the (Ti-Hf)-Ni base alloy, Titanium is substituted by 0-20 mol% Hafnium (Hf), thus a corresponding martensite start temperature (Ms) in the range of 373(K) to 560(K) is obtained.

(3) Ti-(Ni-Pd) alloys

In the Ti-(Ni-Pd) base alloy, Nickel is substituted by 0-50 mol% Palladium (Pd), thus a corresponding martensite start temperature (Ms) in the range of 280(K) to 800(K) is obtained.

(4) Ti-(Ni-Au) alloys

In the Ti-(Ni-Pd) base alloy, Nickel is substituted by 0-50 mol% Gold(Au), thus a corresponding martensite start temperature (Ms) in the range of 300(K) to 850(K) is obtained.

(5) Ti-(Ni-Pt) alloys

In the Ti-(Ni-Pt) base alloy, Nickel is substituted by 0-50 mol% Platinium(Pt), thus a corresponding martensite start temperature (Ms) in the range of 280(K) to 1300(K) is obtained.

(6) Ti-Al alloys

In the Ti-Al base alloys, comprising 30-36 mol% aluminum with the balance Nickel, a corresponding martensite start temperature (Ms) in the range of 273(K) to 1000(K) is obtained.

(7) Ti-Nb alloys

In the Ti-Nb alloys comprising 10-28 mol% Niobium with the balance Titanium, a corresponding martensite start temperature (Ms) in the range of 173(K) to 900(K) is obtained.

(8) Ti-Pd alloys (described in patent document. 2, Kokai publication Tokukai No. Hei 11-36024)

As described in Patent document 2, alloys comprising 48-50 mol% palladium and 50-52 mol% hTitanium by atomic percentage possesses a reverse transformation finish temperature (Af) in excess of 560°C (833K).

(9) Ti-Ta alloys (Non-patent doc.1)

As described in Non-Patent document 1, alloys comprising 50% Tantalum by mass percentage (less than 30% converted to mol percentage) and the balance Titanium, or a mixture of Ti-Ta base alloys molten with 4% Tin (Sn) or 4% Zircon (Zr) by mass percentage possess a shape recovery start temperature in excess of 150°C (423K).
Patent document 1 Kokai publication Tokukai No. 2002-294371
Patent document 2 Kokai publication Tokukai No. Hei 11-36024
Non-patent document 1 Masahiko Ikeda, Shin-ya Komatsu and Yuichiro Nakamura, Effects of Sn and Zr Additions on Phase Constitution and Aging Behavior Ti-50 mass% Ta Alloys Quenched from β Singe Phase Region, Materials Transactions, The Japan Instiute of Metals, page 1106-1112, issue 4, volume 45, 2004.

**Summary of the invention**

Subject of the invention

(Problem to be solved)

The conventional high temperature shape memory alloys No.1 and 2 described above are brittle, and easy to break, resulting in poor machinability thus failure in cold working.
In the above described shape memory alloys No.3-5 and 8, beside the poor machinability, addition of high price of the additive elements (Pd, Au, Pt) also increases the cost then make the alloys quite expensive.
In the above described shape memory alloy No.6, apart from the poor machinability, $Ni_5Al_3$ precipitates weakening the structure stability thus embrittle the alloysx, therefore, repeated use at over 200°C is impossible, that is to say, the alloy does not exihibit shape memory effect.
In the above-mentioned shape memory alloy No.7, even though with good machinability, poor structure stability and loss of shape memory property at over 100°C due to precipitation of ω phase lowers the transformation temperature and make repeated operation impossible, that is to say, it does not exhibit shape memory effect.
The above-mentioned shape memory alloy No.9 fails for repeated operation due to easiness in plastic deformation. Furthermore, the alloy is subjected to loss of shape memory property because ω phase is formed easily during operation.
The present invention addresses the problems of the prior art and provides a high temperature shape memory alloy which has good machinability and is suitable for repeated high temperature operation.

**Means to solve the problem**

(The present invention)

(Invention 1)

A Titanium-Tantalum base shape memory alloys in invention 1 to solve the afore-described technical problem, wherein said alloys consist of 30mol%-40mol% Tantalum; and the balance Titanium; and unavoidable impurity.

(The function of invention 1)

For the high temperature shape memory alloy having the said components in Invention 1, since the said binary alloys consist of 30mol%-40mol% Tantalum; and the balance Titanium, they can be used repeatedly for high temperature operation with high transformation temperature and shape memory effect. Besides, they can be cold worked.

(Invention 2)

The Titanium-Tantalum base shape memory alloy of Invention 1 having the said components of invention 2, wherein said alloys consist of 24mol%-35mol% Tantalum and 0.5mol%-7mol% α phase stablizing elements; and the balance Titanium; and unavoidable impurity.

(Function of Invention 2)

In the Titanium-Tantalum base shape memory alloy of Invention 2 having the said components, since the said alloy consists of 24mol%-35mol% Tantalum and 0.5mol%-7mol% $\alpha$ phase stablizing elements (such as Al and Si), precipitation of $\omega$ phase causing the loss of shape memory property is restrained, therefore they can be used repeatedly for high temperature operation with high transformation temperature and shape memory effect. Besides, they can be cold worked.

(Invention 3)

The Titanium-Tantalum base shape memory alloy of invention 3 to solve the afore-described technical problem, wherein said alloy consists of 25mol%-35mol% Tantalum; and 0.1 mol%- 1mol% invasive elements; and the balance Titanium as; and unavoidable impurity.

(Function of Invention 3)

In the Titanium-Tantalum base shape memory alloy of Invention 3 having the said components, since the said alloys consist of 25mol% - 35mol% Tantalum from; and 0.1mol%- 1mol% invasive elements (such as N, B, O and C), they can be used repeatedly for high temperature operation with high transformation temperature and shape memory effect. Besides, precipitation of $\omega$ phase resulting in the loss of shape memory effect is restrained with the help of the 0.1mol%- 1mol% invasive elements from 0.1mol% to 1mol%, and plastic deformation is also restrained through solution hardening..

(Invention 4)

The Titanium-Tantalum base shape memory alloy of invention 4 to solve the afore-described technical problem, wherein said alloys consist of 15mol% -35mol% Tantalum and 0.5mol%- 12mol% $\beta$ phase stablizing elements being a congener of Ta; and the balance Titanium; and unavoidable impurity.

(Function of Invention 4)

In the Titanium-Tantalum base shape memory alloy of Invention 4 having the said components, since the said alloys consist of 15mol% -35mol% Tantalum and 0.5mol%- 12mol% $\beta$ phase stablizing elements being a congener of Ta (such as V and Nb etc.), they can be used repeatedly for high temperature operation with high transformation temperature and shape memory effect. Besides, they can be cold worked.

(Invention 5)

The Titanium-Tantalum base shape memory alloy of invention 5 to solve the afore-described technical problem, wherein the said alloys consist of 20mol%-35mol% Tantalum and 0.1mol%-2mol% migrating metallic elements; and the balance Titanium; and unavoidable impurity.

(Function of Invention 5)

In the Titanium-Tantalum base shape memory alloy of Invention 5 having the said components, since the said alloys consist of 20mol% -35mol% Tantalum and 0.1mol%-2mol% migrating metallic elements (Mo, Fe, Mn, Co, Cr, Ni, $\beta$ phase stablizing element), while precipitation of $\omega$ phase causing the loss of shape memory property is restrained, they can be used repeatedly for high temperature operation with high transformation temperature and shape memory effect, and hey can also be cold worked.

(Invention 6)

The Titanium-Tantalum base shape memory alloy of invention 6 to solve the afore-described technical problem, wherein said alloys consist of 25mol%-35mol% Tantalum, 0.5mol%- 10mol% Zirconium or Hafnium; and the balance Titanium; and unavoidable impurity.

(The function of invention 6)

In the Titanium-Tantalum base shape memory alloy of Invention 6 having the said components, since the said alloys consist of 25mol%- 35mol% Tantalum and 0.5mol%-10mol% Zirconium or Hafnium, transformation strain increases and precipitation of $\omega$ phase resulting in the loss of shape memory property is restrained, in the meanwhile, they can be used repeatedly for high temperature operation with high transformation temperature and shape memory effect, besides, they can be cold worked.

(Invention 7)

The Titanium-Tantalum base shape memory alloy of invention 7 to solve the afore-described technical problem, wherein said alloys consist of 25mol%-35mol% Tantalum, and 0.5mol%- 5mol% Tin; and the balance Titanium; and unavoidable impurity.

(The function of invention 7)

For the Titanium-Tantalum base shape memory alloy of Invention 7 having the said components, since the said alloys consist of 25mol%- 35mol% Tantalum and 0.5mol% -5mol% Tin, they can be used repeatedly for high temperature operation with high transformation temperature and shape memory effect. Besides, they can be cold worked. Furthermore, by adding 0.5mol% -5mol% Tin, precipitation of $\omega$ phase causing the loss of shape memory property is restrained, in the meanwhile plastic deformation is also restrained.

(Invention 8)

The Titanium-Tantalum base shape memory alloy of invention 8 to solve the afore-described technical problem, wherein said alloys consist of 15mol%-35mol% Tantalum; and additive elements, and the balance Titanium; and unavoidable impurity, with Tantalum equivalent in the range of 30mol% to 39.5mol%.

(The function of invention 8)

For the Titanium-Tantalum base shape memory alloy of Invention 8 having the said components, since the said alloys consist of 15mol%-35mol% Tantalum and certain amount of additive elements added to achieve Tantalum equivalent in the range of 30mol% to 39.5mol%, they can be used repeatedly for high temperature operation with high transformation temperature and shape memory effect.

(Form 1 of Invention 8)

The Titanium-Tantalum base shape memory alloy of Form 1 in invention 8 as described in said Invention 8, wherein said alloys comprise at least one element selected from the group consisting of $\alpha$ phase stablizing elements, invasive elements, $\beta$ phase stablizing elements or migrating metallic elements as the said additive elements.

(Function of Form 1 of Invention 8)

For the Titanium-Tantalum base shape memory alloy of Form 1 in invention 8 having the said components, the said additive elements comprise at least one element selected from the group consisting of $\alpha$ phase stablizing elements, invasive elements, $\beta$ phase stablizing elements and migrating metallic elements.

(Form 2 of Invention 8)

The Titanium-Tantalum base shape memory alloy of Form 2 in invention 8 as described in said Invention 8, wherein said alloys comprise 0.5mol%-5mol% Zr, and at least one element selected from the group consisting of $\alpha$ phase stablizing elements, invasive elements, $\beta$ phase stablizing elements, Hafnium and migrating metallic elements as the said additive elements.

(Function of Form 2 of Invention 8)

For the Titanium-Tantalum base shape memory alloy of Form 2 in invention 8 having the said components, the said alloys is a multiple component alloys that comprises 0.5mol%-5mol% Zr, and at least one element selected from the group consisting of α phase stablizing elements, invasive elements, β phase stablizing elements, Hafnium and migrating metallic elements as the said additive elements.

(Form 3 of Invention 8)

The Titanium-Tantalum base shape memory alloy of Form 3 in invention 8 as described in said Invention 8, wherein said alloys comprise 0.5mol%-2mol% Sn, and at least one element selected from the group consisting α phase stablizing elements, invasive elements, β phase stablizing elements, Hafnium and migrating metallic elements as the said additive.

(Function of Form 3 of Invention 8)

In the Titanium-Tantalum base shape memory alloy of Form 3 in invention 8 having the said components, the said alloys is a multiple component alloy that comprises 0.5mol% -2mol% Sn from, and at least one element selected from the group consisting of α phase stablizing elements, invasive elements, β phase stablizing elements, Hafnium and migrating metallic elements as the said additive.

(Form 4 of Invention 8)

The Titanium-Tantalum base shape memory alloy of Form 4 in invention 8 as described in said Invention 8, wherein said alloys comprise at least one element selected from the group consisting of Zr, Hf, Sn α phase stablizing elements, invasive elements, β phase stablizing elements and migrating metallic elements as the said additive.

(Function of Form 4 of Invention 8)

For the Titanium-Tantalum base shape memory alloy of Form 4 in invention 8 having the said components, the said alloy is a multiple component alloy that comprises at least one element selected from the group consisting of Zr, Hf, Sn α phase stablizing elements, invasive elements, β phase stablizing elements and migrating metallic elements as the said additive.

(Invention 9)

An actuator in Invention 9 to solve the above-mentioned technical problem, wherein the said actuator is made of the Titanium-Tantalum base shape memory alloy defined in either the said inventions 1 to 8 or forms 1 to 4 of invention 8.

(The function of invention 9)

For the actuator in Invention 9 having the said components, since the said actuator is made of the Titanium-Tantalum base shape memory alloy defined in either the said inventions 1 to 8 or forms 1 to 4 of invention 8, it is capable to perform cold working, and in addition, repeated high temperature operation is possible with the help of its high transformation temperature and shape memory effect.

(Invention 10)

An engine in Invention 10 to solve the above-mentioned technical problem, wherein the said engine possesses a flux adjustment valve made of the Titanium-Tantalum base shape memory alloy defined in either the said inventions 1 to 8 or forms 1 to 4 of invention 8.

(The function of invention 10)

For the engine in Invention 10 having the said components, since the said engine possesses a flux adjustment valve made of the Titanium-Tantalum base shape memory alloy defined in either the said inventions 1 to 8 or forms 1 to 4 of invention 8, repeated high temperature operation is possible with the help of high transformation temperature and shape memory effect.

(The effect of invention)

The present invention as mentioned above provides shape memory alloys capable of repeated operation with high machinability.

## Brief description of the drawings

Fig.1 is a graph showing the experimental data of shape memory property evaluation test.

Fig.1A shows the typical strain versus temperature curve of alloys representing repeated shape memory effect.

Fig.1B shows the typical strain versus temperature curve of alloys representing unrepeated shape memory effect.

Fig. 2 indicates the experimental results of Ti-Ta binary alloy in embodiment.

Fig. 2A shows the relationship between Ta mol ratio and Martensite start temperature (Ms) under 50Mpa.
Fig. 2B shows the temperature versus strain curves of Ti-32Ta and Ti-40Ta.

Fig. 3 shows the temperature versus strain curves of Ti-27Ta binary alloys in embodiment.

Fig. 4 shows the temperature versus strain curves of Ti-22Nb binary alloys in comparative example

## Detailed description of preferred embodiments

The following embodiments are described to explain the present invention.

As embodiments of the present invention, 52 alloy specimens Nos. 1 to 52 as shown in Tables 1 to 7, as well comparative examples of alloy specimens Nos. 53 to 57 as shown in Tables 8 were prepared, and corresponding experiments were carried out. Specimens were prepared by means of the below described process including steps (1) to (3).

(1) Each metallic element is measured by mol%, and then molten by means of arc melting method to make alloy ingots. Namely, alloy No.1 (Ti-36Ta) has a composition expressed as 36mol% Ta, and the balance Ti (64mol%), alloy No.5 (Ti-30Ta-1Al) has a composition expressed as 30mol% Ta, 1 mol% Al and the balance Ti (69mol%).

(2) The resultant alloy ingots are subjected to cold rolling at a rolling ratio in the range of 80% to 95% to make billets.

(3) Test pieces of 40mm long, 1.5mm wide and 0.1 mm thick are cut off billets.

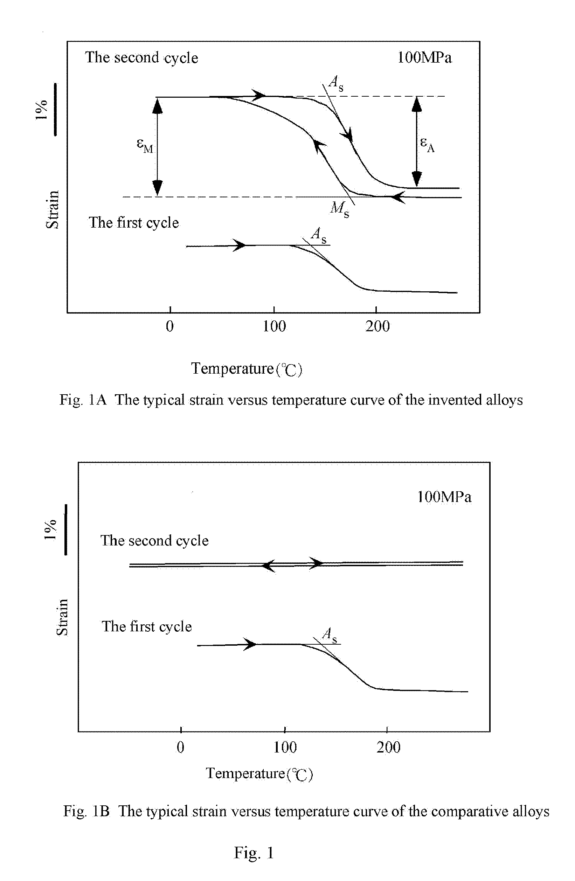

Fig.1 is a graph showing the experimental data of shape memory property evaluation test.
Fig.1A shows the typical strain versus temperature curve of alloys representing repeated shape memory effect.
Fig.1B shows the typical strain versus temperature curve of alloys representing unrepeated shape memory effect.

(Shape memory effect evaluation test)

Experiments were carried out to evaluate shape memory effect of the alloys prepared by means of the above mentioned method. As shown in the following Tables 1 and 8, the transformation temperatures (As, Ms) and shape recovery ratio (%) indicating shape memory effect were evaluated through thermal cycle testing (-100°C-300°C) under stress (100Mpa) using a tension testing machine. It can be seen that about the same temperature versus strain curves for alloys Nos. 1 to 16 and 57 indicating shape memory effect are plotted in Fig. 1A, from which, As (reverse transformation start temperature), Ms (martensite start temperature), transformation strain $\varepsilon_M$, recovery strain $\varepsilon_A$ and recovery ratio ($\varepsilon_A/\varepsilon_M$) were obtained. In addition, about the same temperature versus strain curves were shown in Fig. 1B for alloys Nos. 53 to 56 which exhibit no shape memory effect after the second cycle, from which, As (reverse transformation start temperature) at first cycle was measured.

Furthermore, as shown in Tables 2 to 7, after 2% strain was applied at room temperature using a tension testing machine and then two thermal cycles were performed (room temperature~250°C), shape recovery ratio at each cycle representing shape memory effect were evaluated. Moreover, as listed in the following Tables 1 to 8, Ta equivalent is calculated through the following equation.

Ta equivalent (mol%)＝Ta (mol%)＋1.2×Al (mol%)＋5.6×Si(mol%)＋8.3×

｛N(mol%)＋B(mol%)＋C(mol%)＋O(mol%)＋Mo(mol%)｝＋3.9×V(mol%)＋

1.7×Nb (mol%)＋6.4×｛Fe (mol%)＋Mn(mol%)｝＋5.0×｛Co (mol%)＋

Cr(mol%)｝＋4.2×Ni (mol%)＋1.1×Zr(mol%)＋1.1×Hf (mol%)＋

2.8×Sn(mol%)    …(1)

Besides, through the said Ta equivalent calculation equation (1), the combined effect of Ta content and other elements except Ta on transformation temperature is converted to that of Ta content only. The equation (1) was derived from experimental results of the inventors, by calculating the Ta equivalent, the variation of transformation temperature can be obtained (surmised).

The composition of Ti-Ta binary alloys Nos. 1 to 3 and alloys Nos. 4 to 16 with additive elements to Ti-Ta base in embodiments, along with the measured results of As (°C) at the first cycle for each alloy, Ms(°C) at the second cycle, transformation strain $\varepsilon_M$ (%), recovery strain $\varepsilon_M$ (%), shape recovery ratio ($\varepsilon_A$/$\varepsilon_M$) (%) and Ta equivalent (mol%) are listed in Table 1.

Table 1. Transformation temperature and recovery ratio of the invented alloys

| No. | composition | As (°C) at the first cycle | Ms(°C) at the second cycle | transformation strain εM (%) | recovery strain εM (%) | shape recovery ratio (%) | Ta equivalent (mol%) |
|---|---|---|---|---|---|---|---|
| 1 | Ti-36Ta | 105 | 102 | 1.7 | 1.5 | 88 | 36 |
| 2 | Ti-32Ta | 188 | 180 | 1.7 | 1.6 | 94 | 32 |
| 3 | Ti-30Ta | 198 | 195 | 1.2 | 1.2 | 100 | 30 |
| | | | | | | | |
| 4 | Ti-35Ta-0.5Al | 104 | 105 | 1.8 | 1.7 | 94 | 35.6 |
| 5 | Ti-30Ta-1Al | 146 | 138 | 2.1 | 2.0 | 95 | 31.2 |
| 6 | Ti-27Ta-5Al | 156 | 152 | 2.0 | 2.0 | 100 | 33.0 |
| 7 | Ti-30Ta-5Al | 98 | 95 | 1.6 | 1.4 | 88 | 36.0 |
| 8 | Ti-25Ta-7Al | 131 | 132 | 1.7 | 1.6 | 94 | 33.4 |
| 9 | Ti-30Ta-0.5N | 90 | 112 | 2.0 | 1.8 | 90 | 34.2 |
| 10 | Ti-25Ta-1 N | 157 | 149 | 0.8 | 0.6 | 75 | 33.3 |
| 11 | Ti-35Ta-0.5Nb | 103 | 101 | 1.7 | 1.6 | 94 | 35.9 |
| 12 | Ti-25Ta-5Nb | 151 | 145 | 0.8 | 0.7 | 88 | 33.5 |
| 13 | Ti-20Ta-10Nb | 125 | 101 | 2.0 | 1.8 | 90 | 37.0 |
| 14 | Ti-30Ta-1V | 128 | 122 | 2.1 | 2.1 | 100 | 33.9 |
| 15 | Ti-25Ta-1Mo | 135 | 128 | 0.7 | 0.6 | 86 | 33.3 |
| 16 | Ti-30Ta-1Zr | 185 | 181 | 2.3 | 2.2 | 96 | 31.1 |

Besides, the composition of Ti-Ta base ternary alloys Nos. 4 to 8, 17 and 18, along with the measured results of shape recovery ratio (%) at the first and second cycle, and Ta equivalent (mol%) for each alloy, is listed in Table 2. Al (Aluminium) or Si (Silicon) is added in the alloys as α phase stablizing elements (indicated as 「A group」 in the description of the application) that have effect to increase the transformation temperature at which Ti alloys transform from low temperature stable α phase to high temperature stable β phase, restrain the precipitation of ω phase that causes the loss of shape memory property, and improve thermal stability and shape recovery as well.

Table 2. Shape memory effect of the invented alloys (A group)

| No. | composition | shape recovery ratio (%) at first cycle | shape recovery ratio (%) at second cycle | Ta equivalent (mol%) |
|---|---|---|---|---|
| 4 | Ti-35Ta-0.5Al | 95 | 95 | 35.6 |
| 5 | Ti-30Ta-1Al | 98 | 95 | 31.2 |
| 6 | Ti-27Ta-5Al | 100 | 100 | 33.0 |
| 7 | Ti-30Ta-5Al | 90 | 85 | 36.0 |
| 8 | Ti-25Ta-7Al | 95 | 93 | 33.4 |
| 17 | Ti-24Ta-5Al | 95 | 95 | 30.0 |
| 18 | Ti-30Ta-1Si | 84 | 80 | 35.6 |

In addition, the composition of Ti-Ta base ternary alloys Nos. 9,10, 19 to 22, along with the measured results of shape recovery ratio (%) and Ta equivalent (mol%) at the first and second cycle for each alloy, is listed in Table 3. N (Aluminium), B (Silicon), O, or C is added in each alloy as invasive elements (indicated as 「B group」 in the description of the application) that have effect to restrain the precipitation of ω phase, improve thermal stability and shape recovery, as well restrain plastic deformation through solution hardening,

Table 3. Shape memory effect of the invented alloys (B group)

| No. | composition | shape recovery ratio (%) at first cycle | shape recovery ratio (%) at second cycle | Ta equivalent (mol%) |
|---|---|---|---|---|
| 9 | Ti-30Ta-0.5N | 95 | 90 | 34.2 |
| 10 | Ti-25Ta-1 N | 82 | 70 | 33.3 |
| 19 | Ti-35Ta-0.1 N | 90 | 90 | 35.8 |
| 20 | Ti-25Ta-1 B | 65 | 55 | 33.3 |
| 21 | Ti-25Ta-1O | 60 | 55 | 33.3 |
| 22 | Ti-25Ta-1C | 78 | 72 | 33.3 |

Furthermore, the composition of Ti-Ta base ternary alloys Nos. 11 to 14 and 23 to 26, together with the measured results of shape recovery ratio (%) at the first and second cycle for each alloy and Ta equivalent (mol%), is listed in Table 4. Nb or V being the congener of Ta element is added as β phase stablizing elements (indicated as 「C group」 in the description of the application) to stabilize β mother phase.

Table 4. Shape memory effect of the invented alloys (C group)

| No. | composition | shape recovery ratio (%) at first cycle | shape recovery ratio (%) at second cycle | Ta equivalent (mol%) |
|---|---|---|---|---|
| 11 | Ti-35Ta-0.5Nb | 95 | 83 | 35.9 |
| 12 | Ti-25Ta-5Nb | 90 | 85 | 33.5 |
| 13 | Ti-20Ta-10Nb | 88 | 80 | 37.0 |
| 23 | Ti-15Ta-12Nb | 80 | 75 | 35.4 |
| 24 | Ti-30Ta-1Nb | 95 | 90 | 31.7 |

(continued)

| No. | composition | shape recovery ratio (%) at first cycle | shape recovery ratio (%) at second cycle | Ta equivalent (mol%) |
|---|---|---|---|---|
| 14 | Ti-30Ta-1V | 95 | 92 | 33.9 |
| 25 | Ti-25Ta-3V | 92 | 88 | 36.7 |
| 26 | Ti-20Ta-5V | 90 | 83 | 39.5 |

The composition of Ti-Ta base ternary alloys Nos. 15, 27 to 33, along with the measured results of shape recovery ratio (%) at the first and second cycle for each alloy, and Ta equivalent (mol%), is listed in Table 5. Mo, Cr, Fe, Mn, Co or Ni being the migrating metallic element is added as $\beta$ phase stablizing elements (indicated as 「D group」 in the description of the application) to stabilize $\beta$ phase of Ti alloys.

Table 5. Shape memory effect of the invented alloys (D group)

| No. | composition | shape recovery ratio (%) at first cycle | shape recovery ratio (%) at second cycle | Ta equivalent (mol%) |
|---|---|---|---|---|
| 15 | Ti-25Ta-1 Mo | 85 | 80 | 33.3 |
| 27 | Ti-20Ta-2Mo | 80 | 75 | 36.6 |
| 28 | Ti-35Ta-0.1Mo | 87 | 85 | 35.8 |
| 29 | Ti-25Ta-2Fe | 70 | 65 | 37.8 |
| 30 | Ti-25Ta-2Mn | 74 | 65 | 37.8 |
| 31 | Ti-25Ta-2Co | 75 | 60 | 35.0 |
| 32 | Ti-25Ta-2Cr | 75 | 66 | 35.0 |
| 33 | Ti-25Ta-2N$_i$ | 80 | 65 | 33.4 |

The composition of Ti-Ta base ternary alloys Nos. 16, 34 to 40, along with the measured results of shape recovery ratio (%) at the first and second cycle for each alloy, and Ta equivalent (mol%) is listed in Table 6. Zr(Zirconium), Hf(Hafnium) or Sn(Tin) is added as additive elements (indicated as 「D group」 in the description of the application). Besides, Zr and Hf have an effect to increase transformation strain ($\varepsilon_M$) remarkablely (refer to Table 1), and Sn will be effective to restrain the precipitation of $\omega$ phase through solution hardening.

Table 6. Shape memory effect of the invented alloys (Zr, Hf, and Sn)

| No. | composition | shape recovery ratio (%) at first cycle | shape recovery ratio (%) at second cycle | Ta equivalent (mol%) |
|---|---|---|---|---|
| 16 | Ti-30Ta-1Zr | 95 | 92 | 31.1 |
| 34 | Ti-35Ta-0.5Zr | 95 | 94 | 35.6 |
| 35 | Ti-30Ta-5Zr | 90 | 82 | 35.5 |
| 36 | Ti-25Ta-10Zr | 89 | 80 | 36.0 |
| 37 | Ti-30Ta-5Hf | 75 | 70 | 35.5 |
| 38 | Ti-30Ta-1Sn | 80 | 75 | 32.8 |
| 39 | Ti-25Ta-5Sn | 77 | 70 | 39.0 |
| 40 | Ti-35Ta-0.5Sn | 85 | 80 | 36.4 |

The composition of Ti-Ta base multiple component alloys Nos. 41 to 52, in which the said $\alpha$ phase stabilizing element, invasive element, $\beta$ phase stabilizing element, Zr, Hf or Sn is added, along with the measured results of shape recovery ratio (%) at the first and second cycle for each alloy and Ta equivalent (mol%), is listed in Table 7.

Table 7. Shape memory effect of the invented alloys (multiple component)

| No. | composition | shape recovery ratio (%) at first cycle | shape recovery ratio (%) at second cycle | Ta equivalent (mol%) |
|---|---|---|---|---|
| 41 | Ti-25Ta-3Nb-1Al | 92 | 90 | 31.3 |
| 42 | Ti-20Ta-5Nb-5Al | 90 | 85 | 34.5 |
| 43 | Ti-15Ta-8Nb-5Al | 85 | 82 | 34.6 |
| 44 | Ti-25Ta-3Nb-0.5N | 73 | 70 | 34.3 |
| 45 | Ti-25Ta-3Nb-0.5Mo | 76 | 72 | 34.3 |
| 46 | Ti-25Ta-5Zr-1Al | 83 | 80 | 31.7 |
| 47 | Ti-25Ta-5Nb-3Al-2Zr | 85 | 80 | 34.3 |
| 48 | Ti-20Ta-3Nb-2Al-1Zr-0.5N | 83 | 80 | 32.8 |
| 49 | Ti-20Ta-3Al-0.5Zr -1 Mo | 82 | 75 | 32.5 |
| 50 | Ti-27Ta-5Al-0.5Sn | 95 | 95 | 34.4 |
| 51 | Ti-25Ta-3Nb-2Sn | 85 | 85 | 35.7 |
| 52 | Ti-25Ta-2Zr-1 Sn-2Al-1 Hf | 80 | 75 | 33.5 |

As comparative examples, the composition of alloys Nos. 53 to 57, along with the measured results of shape recovery ratio (%) at the first and second cycle for each alloy and Ta equivalent (mol%), is listed in Table 8. Alloy No. 53 is a Ti-22Nb binary alloy according to conventional technology (7), alloy No. 54 is a Ti-27Ta binary alloy with 27mol% (=58wt %) Ta given as an example of Ta content below 30mol% as described in non-patent document 1. Alloys Nos. 55 and 56 are the alloys described in non-patent document 1 according to conventional technology (9) with Ta equivalent less than 30mol%, alloy No. 57 is a Ti-40Ta base binary alloy.

In addition, as shown in Table 8, in the case when transformation temperature Ms at the second cycle is not identified, with transformation strain $\varepsilon_M$ and recovery strain $\varepsilon_A$ also not observed, namely, in the case while the shape memory property loses at the first cycle, it is marked 「×」 J in Table 8.

Table 8. Transformation temperature and recovery ratio of the comparative examples

| No. | composition | As(°C) at the first cycle | Ms(°C) at the second cycle | transformation strain $\varepsilon_M$ (%) | recovery strain $\varepsilon_A$ (%) | shape recovery ratio (%) | Ta equivalent (mol%) |
|---|---|---|---|---|---|---|---|
| 53 | Ti-22Nb | 180 | × | × | × | × | 37.4 |
| 54 | Ti-27Ta | 265 | × | × | × | × | 27.0 |
| 55 | Ti-21.7Ta-2 .8Sn | 245 | × | × | × | × | 29.4 |
| 56 | Ti-19Ta-8Z r | 220 | × | × | × | × | 27.8 |
| 57 | Ti-40Ta | 23 | 28 | 2.1 | 1.7 | 81 | 40.0 |

The following conclusion can be drawn from the forgoing description of the experiment results. For Ti-Ta base binary alloys (Nos. 1 to 3) with 30mol%-36mol% Ta, transformation temperature of over 100°C was observed and high shape recovery ratio was confirmed. Accordingly, the alloys can be used for repeated operation at high temperature (over 50°C (323K)) as shape memory alloys.

Besides, even with Ta content below 30mol%, high transformation temperature and shape recovery ratio was identified for alloys Nos. 4 to 8, 17 and 18 with Ta equivalent above 30mol% by adding $\alpha$ phase stablizing elements (Al, Si) of A group (refer to Tables 1 and 2). Moreover, if the total content of $\alpha$ phase stablizing elements exceeds 7mol%, cold rolling of over 80mol% deformation is difficult, therefore total content below 7mol% is preferable.

Furthermore, as shown in Tables 1 and 3, even with Ta content below 30mol%, high transformation temperature and shape recovery ratio are confirmed for alloys Nos. 9, 10, and 19 to 22, with Ta equivalent above 30mol% by adding B group invasive elements (N, B, O, C). Moreover, with increasing addition of invasive elements, recovery ratio decreases, and cold workability to make test pieces reduces, when the total content of invasive elements exceeds 1mol%, cold rolling of over 80mol% deformation for making test pieces is difficult.

Additionally, as shown in Tables 1 and 4, even with Ta content below 30mol%, high transformation temperature and shape recovery ratio were identified for alloys Nos. 11 to 14 and 23 to 26 with Ta equivalent above 30mol% by adding C group elements (Nb, V). Moreover, for alloys Nos. 11 to 14 and 23 to 26, it can be seen that with increasing addition of C group elements, recovery ratio decreases, meanwhile transformation temperature reduces with increasing Ta equivalent, accordingly, total content of below 12mol% is preferable in order to obtain recovery ratio exceeding 75%.

Furthermore, as shown in Tables 1 and 5, even with Ta content below 30mol%, high transformation temperature and shape recovery ratio were identified for alloys Nos. 15, 27 to 33 with Ta equivalent above 30mol% by adding D group elements (Mo, Fe, Mn, Co, Cr, Ni). Moreover, for alloys Nos. 15 and 27, it can be seen that with increasing addition of D group elements, recovery ratio decreases, thus cold machinability reduces, in the meanwhile, transformation temperature reduces. If the total content of D group element exceeds 2mol%, cold rolling of over 80mol% deformation for making test pieces is difficult. Accordingly, total content of D group elements below 2mol% is preferable.

Additionally, as shown in Tables 6 and 8, even with Ta content below 30mol%, high transformation temperature and shape recovery ratio were identified for alloys Nos. 16 and 34 to 40 with Ta equivalent above 30mol% by adding Zr, Hf, Sn. Moreover, for alloys Nos. 16, 34 to 36 and 38 to 40, it can be seen that with increasing addition of Zr and Sn, recovery ratio tends to decrease resulting in the loss of shape memory effect, thus cold machinability reduces. Accordingly, transformation temperature reduces if Ta equivalent is too high, total Zr content below 10mol% and Sn content below 5mol% as well is preferable.

Additionally, as shown in Table 7, high shape recovery ratio was identified for alloys Nos. 41 to 52 with Ta equivalent above 30mol% by adding A group, B group, C group, D group, Zr, Hf and Sn additive elements.

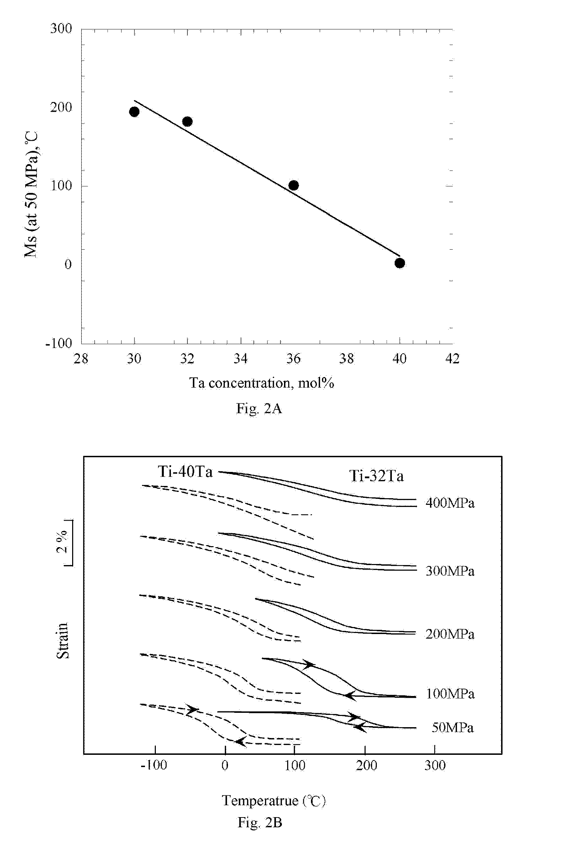

Fig. 2 indicates the experimental results of Ti-Ta binary alloys in embodiment. Fig. 2A shows the relationship between Ta mol ratio and Martensite start temperature (Ms) under 50Mpa, and Fig. 2B shows the temperature versus strain curves of Ti-32Ta and Ti-40Ta.

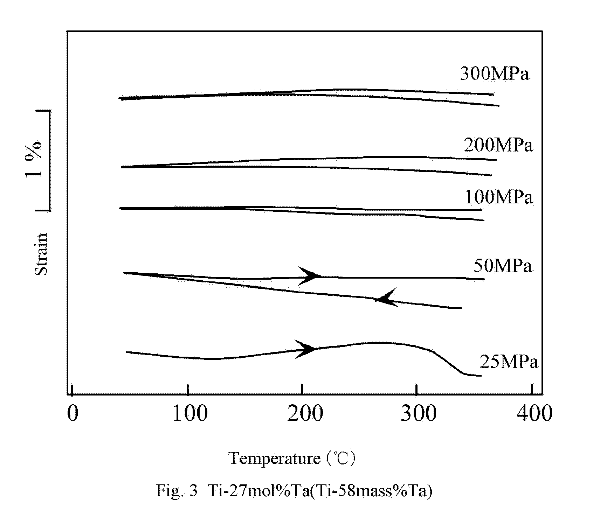

Fig. 3 shows the temperature versus strain curves of Ti-27Ta binary alloys in embodiment.

As shown in Tables 1, 8 and Fig. 2, from the experimental results of alloys 1 to 3 and 57, as well as Fig. 2, for Ti-Ta base binary alloys, transformation temperature reduces to below 50°C with Ta content above 40mol%, shape memory effect fails under thermal cycle at high temperature. In addition, it can be seen from Fig. 2B that the shape recovery ratio decreases.

Furthermore, as shown from the experimental results of alloys Nos. 1 to 3, 54 and Fig. 3, for Ti-Ta base binary alloys, high transformation temperature is obtained when Ta content is lower than 30mol%, and shape memory effect is identified only at the first cycle, but not identified after the second cycle (as marked 「×」 J in Table 8), indicating precipitation of ω phase causes failure of shape memory effect. Additionally, when Ta content is lower than 30mol%, plastic deformation is easy to occur resulting in failure for repeated operation.

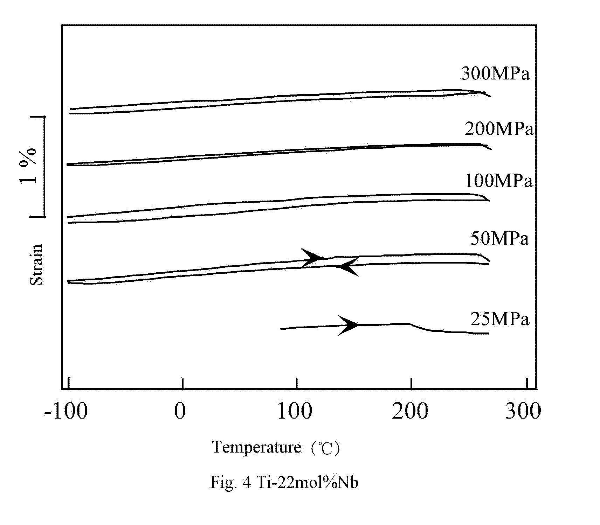

Fig. 4 shows the temperature versus strain curves of Ti-22Nb binary alloys in comparative example. From the experimental results of alloys No. 53 in Table 8 and Fig. 4, it could be confirmed that even though Ti-22Nb alloy had approximately the same transformation temperature as Ti-32Ta alloys, mere thermal expansion or shrinkage would cause a thermally unstable state since shape memory property lost after the second cycle as shown in Fig. 4.

In the above description, the preferred exemplary embodiments of the present invention were set forth, it will be understood that the invention is not limited to the specific forms shown, modification may be made without departing from the scope of the present invention as expressed in the claims.

Industrial application

Since the afore-described shape memory alloy does not lose its shape memory property during repeated operation at high temperature, it can be used as a valve inside gas channel of an engine (engine of automobile, aircrafts, or gas turbine) for high temperature operation, when heated, channel area is regulated with the help of the shape memory effect; when cooled, channel area is reversed back by a spring used for deforming the valve. In addition, it can also be used as lubricant supplying valve of high speed rotating shaft. Furthermore, it can be used as safety device for power supply of household electric appliance at high temperature operation. In addition, it can also be used as an actuator for high temperature operation. When it is used as an actuator, the high transformation temperature leads to a big difference between the ambient temperature (namely room temperature) and operating temperature therefore improves cooling efficiency and increases the cooling speed as well. As a result, with increasing cooling speed, responsiveness improves resulting in increasing operating frequency.

**Claims**

1. A Titanium-Tantalum base shape memory alloys, wherein said alloy consists of 30mol%-40mol% Tantalum; and the balance Titaniums; and unavoidable impurity.

2. A Titanium-Tantalum base shape memory alloy, wherein said alloy consists of 24mol%-35mol% Tantalum and 0.5mol%-7mol% α phase stablizing element; and the balance Titanium; and unavoidable impurity.

3. A Titanium-Tantalum base shape memory alloy, wherein said alloy consists of 25mol%-35mol% Tantalum; and 0.1mol%-1mol% invasive elements; and the balance Titanium; and unavoidable impurity.

4. A Titanium-Tantalum base shape memory alloy, wherein said alloy consists of 15mol%-35mol% Tantalum and 0.5mol%-12mol% β phase stablizing elements being a congener of Ta group; and the balance Titanium; and unavoidable impurity.

5. A Titanium-Tantalum base shape memory alloy, wherein said alloy consists of 20mol%-35mol% Tantalum and 0.1mol%-2mol% migrating metallic elements; and the balance Titanium; and unavoidable impurity.

6. A Titanium-Tantalum base shape memory alloy, wherein said alloy consists of 25mol%-35mol% Tantalum and 0.5mol%-10mol% Zirconium or Hafnium; and the balance Titanium; and unavoidable impurity.

7. A Titanium-Tantalum base shape memory alloy, wherein said alloy consists of 25mol%-35mol% Tantalum, and 0.5mol%-5mol% Tin; and the balance Titanium; and unavoidable impurity.

8. A Titanium-Tantalum base shape memory alloy, wherein said alloy consists of 15mol%-35mol% Tantalum; and certain amount of additive elements to make the total Tantalum equivalent in the range of 30mol%-39.5mol%, and the balance Titanium; and unavoidable impurity.

9. A Titanium-Tantalum base shape memory alloy according to claim 8, wherein said alloy comprises at least one element selected from the group consisting α phase stablizing elements, invasive elements, β phase stablizing elements and migrating metallic elements as the said additive.

10. A Titanium-Tantalum base shape memory alloy according to claim 8, wherein said alloy comprises 0.5mol%-5mol% Zr, and at least one element selected from the group consisting of α phase stablizing elements, invasive elements, β phase stablizing elements, Hafnium and migrating metallic elements as the said additive.

11. A Titanium-Tantalum base shape memory alloy according to claim 8, wherein said alloy comprises 0.5mol%-2mol% Sn, and at least one element selected from the group consisting of α phase stablizing element, invasive element, β phase stablizing element, Hafnium and migrating metallic element as the said additive.

12. A Titanium-Tantalum base shape memory alloy according to claim 8, wherein said alloy comprises at least one element selected from the group consisting of Zr, Hf, Sn α phase stablizing element, invasive elements, β phase stablizing elements and migrating metallic elements as the said additive.

13. An actuator, wherein the said actuator is made of a Titanium-Tantalum base shape memory alloy described in claims 1 to 12.

14. An engine equipped with a flux adjusting valve, wherein the said flux adjusting valve is made of a Titanium-Tantalum base shape memory alloy described in claims 1 to 12.

Fig. 1A  The typical strain versus temperature curve of the invented alloys

Fig. 1B  The typical strain versus temperature curve of the comparative alloys

Fig. 1

Fig. 2A

Temperatrue (℃)

Fig. 2B

Fig. 3  Ti-27mol%Ta(Ti-58mass%Ta)

Fig. 4 Ti-22mol%Nb

<table>
<tr><td colspan="2" align="center"><strong>INTERNATIONAL SEARCH REPORT</strong></td><td colspan="2">International application No.<br>PCT/JP2006/323976</td></tr>
</table>

A. CLASSIFICATION OF SUBJECT MATTER
*C22C27/02*(2006.01)i, *C22C14/00*(2006.01)i

According to International Patent Classification (IPC) or to both national classification and IPC

B. FIELDS SEARCHED

Minimum documentation searched (classification system followed by classification symbols)
*C22C1/00-49/14*

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-329325 A  (Kabushiki Kaisha Tekuno Achi),<br>27 November, 2001 (27.11.01),<br>Claims<br>& US 6786984 B1 | 8-12<br>13,14<br>1-7 |
| Y | JP 2005-336534 A  (Tokyo University of Science),<br>08 December, 2005 (08.12.05),<br>Claims; Par. Nos. [0033] to [0039]<br>(Family: none) | 13 |
| Y | JP 2005-256689 A  (Denso Corp.),<br>22 September, 2005 (22.09.05),<br>Claims; Par. Nos. [0002], [0041]<br>(Family: none) | 14 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 February, 2007 (23.02.07) | Date of mailing of the international search report<br>06 March, 2007 (06.03.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002294371 A

- JP HEI1136024 B

### Non-patent literature cited in the description

- Effects of Sn and Zr Additions on Phase Constitution and Aging Behavior Ti-50 mass% Ta Alloys Quenched from β Singe Phase Region. **MASAHIKO IKEDA ; SHIN-YA KOMATSU ; YUICHIRO NAKA-MURA.** Materials Transactions. The Japan Instiute of Metals, 2004, vol. 45, 1106-1112